# EUROPEAN PATENT SPECIFICATION

(11) **EP 4 479 617 B1**
(45) Date of publication and mention of the grant of the patent: **24.09.2025**
(21) Application number: 22707402.8
(22) Date of filing: 17.02.2022
(51) Int. Cl.: E05F 15/60, E05F 15/689, E05F 15/695, E05F 15/697, H02K 41/03

(54) **A WINDOW CONTROL DEVICE FOR CONTROLLING THE UP AND DOWN DISPLACEMENT OF A WINDOW GLASS**
FENSTERSTEUERUNGSVORRICHTUNG ZUR STEUERUNG DER AUF- UND ABBEWEGUNG EINES FENSTERGLASES
DISPOSITIF DE COMMANDE DE FENÊTRE POUR COMMANDER LE DÉPLACEMENT VERS LE HAUT ET VERS LE BAS D'UNE VITRE

(43) Date of publication of application: 25.12.2024
(73) Proprietor: Volvo Truck Corporation, 40508 Göteborg (SE)
(72) Inventor: SWAMINATHAN, Rajaraman, BANGALORE, KARNATAKA, 560085 (IN); THANGAMARIAPPAN, Balaganesh, BANGALORE, KARNATAKA, 560075 (IN); VARGHESE, Sonu G, Mavelikara, Kerala, 690101 (IN); G, Marasami, Nagar Hosur, 635109 (IN)
(74) Representative: Germain Maureau
(86) International application number: PCT/EP2022/053968
(87) International publication number: WO 2023/155991

(56) References cited:
- EP-B1- 1 180 443
- DE-A1- 102010 015 191
- JP-A- 2000 130 021
- KR-A- 20100 065 891
- US-A1- 2005 252 091

## Description

### TECHNICAL FIELD

The invention relates generally to the automotive field. More particularly, the invention relates to a window control device for controlling the up and down displacement of a window glass.

The invention can be applied in heavy-duty vehicles, such as trucks, buses, and construction equipment. The invention may also be used in other vehicles such as a passenger car.

### BACKGROUND

In heavy trucks, the driver seat is generally positioned at a high position above the ground. Hence, the driver may have difficulties seeing the external areas surrounding the cab since the cab door may impede the driver's view.

A solution to this problem is to arrange a lower window in the lower half of the cab door which provides a downward view of the external surrounding areas. However, this lower window reduces the available space for installing a conventional window winding mechanism arranged in the upper-half of the cab door. The installation of such a lower window may thus lead to the removal of the window winding mechanism, thus preventing any up and down displacement of the upper door window. JP2000130021A discloses a power window device with linear magnetic motor to directly open/close a window glass, with a holding mechanism that locks an output shaft when the motor stops.

### SUMMARY

An object of the invention is to provide a window control device for controlling the up and down displacement of a window glass, which is sufficiently compact to enable its installation inside a cab door equipped with a lower window.

The object is achieved by a control device according to claim 1.

Thus configured, the present invention proposes a raising and lowering mechanism that is relatively compact, and, in particular, that mainly extends in the left and right areas surrounding the upper window glass but not in the intermediate areas extending between the upper and lower window glasses.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a front view of a vehicle door having a window control device according to the present invention,
Fig. 2 is a cross-sectional view taken along the section line A-A of Fig. 1,
Fig. 3a is a schematic view of a window control device according to an exemplary embodiment of the present invention, the window glass being in a locked state and in a lower position,
Fig. 3b is a view similar to Fig. 3a, but the window glass being in a released state,
Fig. 3c is a view similar to Fig. 3b, but the window glass being in an upper position.

### DETAILED DESCRIPTION OF EXAMPLE EMBODIMENTS OF THE INVENTION

Various embodiments of the disclosure are described in detail below. While specific implementations are described, it should be understood that this is done for illustration purposes only.

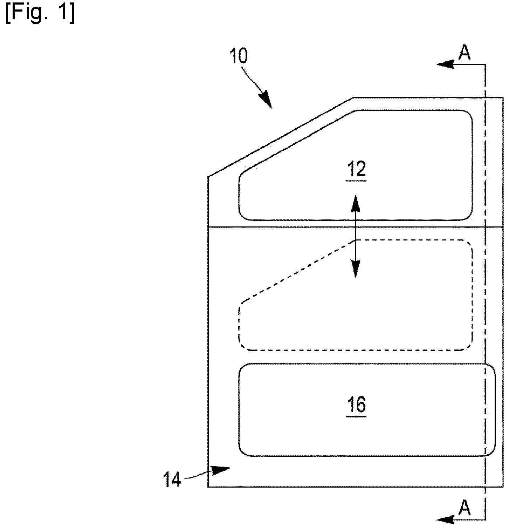

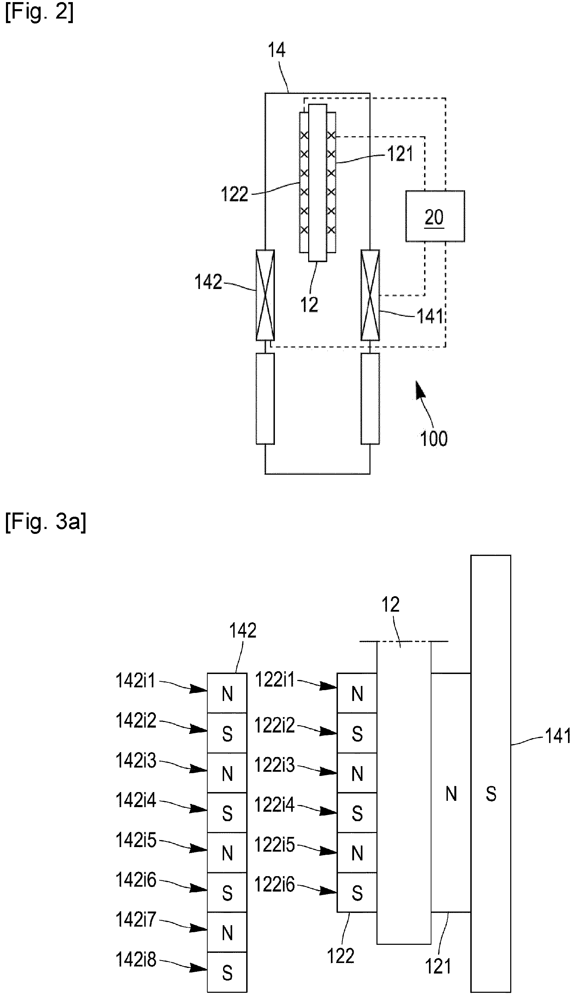

By reference to Figs 1 and 2, it is shown a window control device 100 according to the present invention that is mounted to a vehicle door 10. Briefly, the vehicle door 10 includes a window frame 14, an upper window glass 12 slidably mounted thereto and a lower window glass 16 fixedly mounted thereto. The window frame 14 comprises an upper portion 14a and a lower portion 14b, the upper portion 14b being disposed above the lower portion 14b. The upper portion 14a is provided with an upper opening 13 having substantially the same shape as the upper window glass 12 and the lower portion 14b is provided with a lower opening 15 having substantially the same shape as the lower window glass 16, said lower window glass 16 entirely closing said lower opening 15. The upper window glass 12 is movable between a raised position, as illustrated in a continuous line in Fig. 1, in which it entirely closes the upper opening 13 and in which only its end edges are covered by the window frame 14, and a lowered position, as illustrated in discontinuous line in Fig. 1, in which it is completely hidden inside the window frame 14, the upper opening 13 being entirely freed. The upper window glass 12 is movable between its raised position and its lowered position under the action of the window control device 100.

As illustrated in Fig. 2, the window control device 100 comprises first and second permanent magnet strips 121, 122 attached to the upper window glass 12, first and second sets of electromagnets 141, 142 attached to the window frame 14. A control system 20 is operably coupled to the first and second sets of electromagnets 141, 142. The permanent magnet strips 121, 122 may for example be glued or screwed or otherwise fastened to the upper window glass 12.

According to the invention as illustrated in Fig. 2, the first and second permanent magnet strips 121, 122 are disposed at opposite sides 12i, 12j of the upper window glass 12, the strips 121, 122 extending along a right end edge thereof that is covered by the window frame 14. The first and second sets of electromagnets 141, 142 are respectively attached to two opposite internal sides 14i, 14j of the window frame 14 so as to face respectively the first and second permanent strips 121, 122.

In the specific embodiment illustrated in Figs 3a-3c, the first permanent magnet strip 121 comprises a single flat permanent magnet with opposite polarity on each side and the first set of electromagnets 141 facing said permanent magnet comprises only one electromagnet that can selectively have north or south polarity. The second permanent magnet strip 122 has a series of individual permanent magnets 122i1-122i6 arranged in alternating polarity and the second set of electromagnets 142 facing said permanent magnets comprises a series of individual electromagnets 142i1-142i8 that are each controllable to have north or south polarity.

The control system 20 is adapted to control the polarity of the electromagnets 141, 142 and the intensity of the magnetic field generated by said electromagnets 141, 142. As explained in detail in the following paragraphs, this control may allow defining a locked state for the upper window glass 12, in which any up and down displacement of said upper window glass 12 is prevented, and a released state for the upper window glass 12, in which said upper window glass 12 may be raised or lowered.

In particular, in the locked state illustrated in Fig. 3a, the control system 20 is adapted to set the same polarity to the electromagnet 141 as that of the permanent magnet 121 so that the permanent magnet 121 is attracted by the electromagnet 141, thus preventing any up and down displacement of the upper window glass 12.

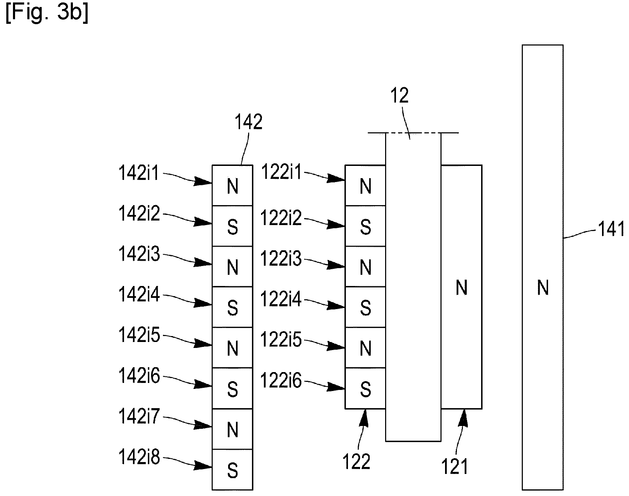

In the released state illustrated in Fig. 3b, the control system 20 is adapted to set an opposite polarity to the electromagnet 141 than that of the permanent magnet 121 so that the permanent magnet 121 is repelled by the electromagnet 141. The upper window glass 12 thus levitates between the two opposite internal sides 14i, 14j of the window frame 14.

Thereafter, to operate an up and down displacement of the upper window glass 12, the control system 20 is adapted to set the polarity of the electromagnets 142i1-142i8 and the intensity of the magnetic field generated by said electromagnets 142i1-142i8 so as to generate selectively a repulsive force and/or an attractive force on the permanent magnets 122i1-122i6, thus resulting in an up or down displacement of the upper window glass 12.

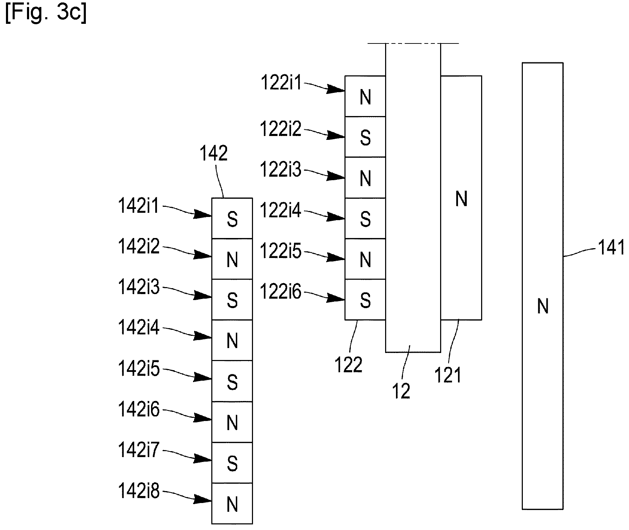

In particular, to move the upper window glass 12 from its initial position illustrated in Fig. 3b to its final position illustrated in Fig. 3c, the control system 20 may, in a first step, increase the intensity of the magnetic field generated by the electromagnet 142i6 that faces the permanent magnet 122i6 so as to generate a repulsive force on said permanent magnet 122i6, thus leading to an upward movement of the upper window glass 12. When the permanent magnet 122i6 faces the electromagnet 142i5, the control system 20 may, in a second step, modify at the same time the polarities of the electromagnets 142i1-i8 so that the electromagnets 142i1-142i5 that respectively face the permanent magnets 122i2-122i6 have the same polarity as said corresponding permanent magnets 122i2-122i6. By repeating said first and second steps when the permanent magnet 122i6 initially faces the electromagnets 142i5 and 142i4, the upper window glass 12 is finally positioned as illustrated in Fig. 3c.

It is to be understood that the present invention is not limited to the embodiments described above and illustrated in the drawings; rather, the skilled person will recognize that many changes and modifications may be made within the scope of the appended claims.

## Claims

1. A window control device for controlling up and down displacement of a window glass of a vehicle, comprising:
- first and second permanent magnet strips (121, 122) attachable to the window glass (12), wherein the first and second permanent magnet strips (121, 122) are disposed in use at opposite sides of the window glass (12),
- a window frame (14) surrounding at least partially the window glass (12) and being provided with first and second sets of electromagnets (141, 142),
- a control system (20) for controlling the polarity of the electromagnets (141, 142) and the intensity of the magnetic field generated by said first and second sets of electromagnets (141, 142) so that, in a locked state, the first set of electromagnets (141) are adapted to attract the first permanent magnet strip (121), thus preventing any up and down displacement of the window glass, and, in a released state of the window glass, the first set of electromagnets (141) are adapted to repel the first permanent magnet strip (121), thus allowing an up and down displacement of the window glass, and the second set of electromagnets (142) are adapted to generate selectively a repulsive and/or attractive force on the second permanent magnet strip (122), thus resulting in an up or down displacement of the window glass.

2. The window control device according to claim 1, wherein the first permanent magnet strip (121) comprises a single flat permanent magnet with opposite polarity on each side and the first set of electromagnets (141) comprises only one electromagnet that can have either north or south polarity.

3. The window control device according to claim 1 or 2, wherein the second permanent magnet strip (122) has a series of individual permanent magnets (122i1-122i6) arranged in alternating polarity and the second set of electromagnets (142) comprises a series of individual electromagnets (142i1-142i8) that can each have either north or south polarity.

4. The window control device according to any one of claims 1 to 3, wherein the first and second permanent magnet strips (121, 122) are disposed along an end edge of the window glass (12) that is covered by the window frame (14).

5. A vehicle door (10) comprising an upper window glass (12) and a window control device according to any one of claims 1 to 4 for controlling the up and down displacement of said upper window glass (12).

6. The vehicle door (10) according to claim 5, further comprising seals disposed between the upper window glass (12) and the window frame (14), said seals being adapted to prevent water entry and air leakage.

7. The vehicle door (10) according to claim 5 or 6, further comprising a lower window glass that is fixedly connected to the window frame (14).

## Patentansprüche

1. Fenstersteuerungsvorrichtung zur Steuerung der Auf- und Abwärtsbewegung einer Fensterscheibe eines Fahrzeugs, umfassend:
- einen ersten und einen zweiten Permanentmagnetstreifen (121, 122), die an der Fensterscheibe (12) befestigt werden können, wobei der erste und der zweite Permanentmagnetstreifen (121, 122) im Gebrauch an gegenüberliegenden Seiten der Fensterscheibe (12) angeordnet sind,
- einen Fensterrahmen (14), der die Fensterscheibe (12) mindestens teilweise umgibt und mit einem ersten und einem zweiten Satz von Elektromagneten (141, 142) versehen ist,
- ein Steuersystem (20) zur Steuerung der Polarität der Elektromagnete (141, 142) und der Intensität des von dem ersten und dem zweiten Satz von Elektromagneten (141, 142) erzeugten Magnetfelds, so dass in einem verriegelten Zustand der erste Satz von Elektromagneten (141) so ausgelegt ist, dass er den ersten Permanentmagnetstreifen (121) anzieht, wodurch eine Auf-und Abwärtsbewegung der Fensterscheibe verhindert wird, und in einem gelösten Zustand der Fensterscheibe der erste Satz von Elektromagneten (141) so ausgelegt ist, dass er den ersten Permanentmagnetstreifen (121) abstößt, wodurch eine Auf- und Abwärtsbewegung der Fensterscheibe ermöglicht wird, und der zweite Satz von Elektromagneten (142) so ausgelegt ist, dass er selektiv eine abstoßende und/oder anziehende Kraft auf den zweiten Permanentmagnetstreifen (122) erzeugt, wodurch eine Auf- oder Abwärtsbewegung der Fensterscheibe entsteht.

2. Fenstersteuerungsvorrichtung nach Anspruch 1, wobei der erste Permanentmagnetstreifen (121) einen einzelnen flachen Permanentmagneten mit entgegengesetzter Polarität auf jeder Seite umfasst und der erste Satz von Elektromagneten (141) nur einen Elektromagneten umfasst, der entweder eine Nord- oder eine Südpolarität aufweisen kann.

3. Fenstersteuerungsvorrichtung nach Anspruch 1 oder 2, wobei der zweite Permanentmagnetstreifen (122) eine Reihe einzelner Permanentmagnete (122i1 - 122i6) aufweist, die in wechselnder Polarität angeordnet sind, und der zweite Satz von Elektromagneten (142) eine Reihe einzelner Elektromagnete (142i1 - 142i8) umfasst, die jeweils entweder eine Nord- oder eine Südpolarität aufweisen können.

4. Fenstersteuerungsvorrichtung nach einem der Ansprüche 1 bis 3, wobei der erste und der zweite Permanentmagnetstreifen (121, 122) entlang einer Endkante der Fensterscheibe (12) angeordnet sind, die von dem Fensterrahmen (14) abgedeckt wird.

5. Fahrzeugtür (10), umfassend eine obere Fensterscheibe (12) und eine Fenstersteuerungsvorrichtung nach einem der Ansprüche 1 bis 4 zur Steuerung der Auf- und Abwärtsbewegung der oberen Fensterscheibe (12).

6. Fahrzeugtür (10) nach Anspruch 5, ferner umfassend Dichtungen, die zwischen der oberen Fensterscheibe (12) und dem Fensterrahmen (14) angeordnet sind, wobei die Dichtungen so ausgelegt sind, dass sie Wassereintritt und Luftaustritt verhindern.

7. Fahrzeugtür (10) nach Anspruch 5 oder 6, ferner umfassend eine untere Fensterscheibe, die fest mit dem Fensterrahmen (14) verbunden ist.

## Revendications

1. Dispositif de commande de vitre pour commander le déplacement vers le haut et vers le bas d'une vitre de fenêtre de véhicule, comprenant :
- des première et seconde bandes d'aimant permanent (121, 122) pouvant être fixées à la vitre de fenêtre (12), les première et seconde bandes d'aimant permanent (121, 122) étant disposées, en cours d"utilisation, sur des côtés opposés de la vitre de fenêtre (12),
- un cadre de vitre (14) entourant au moins partiellement la vitre de fenêtre (12) et étant muni de premier et de second ensembles d'électroaimants (141, 142),
- un système de commande (20) pour commander la polarité des électroaimants (141, 142) et l'intensité du champ magnétique généré par lesdits premier et de second ensembles d'électroaimants (141, 142), de sorte que, dans un état verrouillé, le premier ensemble d'électroaimants (141) soit adapté pour attirer la première bande d'aimant permanent (121), empêchant ainsi tout déplacement vers le haut et vers le bas de la vitre de fenêtre, et, dans un état déverrouillé de la vitre de fenêtre, le premier ensemble d'électroaimants (141) soit adapté pour repousser la première bande d'aimant permanent (121), permettant ainsi un déplacement vers le haut et vers le bas de la vitre de fenêtre, et le second ensemble d'électroaimants (142) soit adapté pour générer sélectivement une force de répulsion et/ou d'attraction sur la seconde bande d'aimant permanent (122), entraînant ainsi un déplacement vers le haut ou vers le bas de la vitre de fenêtre.

2. Dispositif de commande de vitre selon la revendication 1, dans lequel la première bande d'aimant permanent (121) comprend un seul aimant permanent plat avec une polarité opposée sur chaque côté et le premier ensemble d'électroaimants (141) ne comprend qu'un seul électroaimant qui peut avoir une polarité nord ou sud.

3. Dispositif de commande de vitre selon la revendication 1 ou 2, dans lequel la seconde bande d'aimant permanent (122) a une série d'aimants permanents individuels (122i1-122i6) agencés en polarité alternée et le second ensemble d'électroaimants (142) comprend une série d'électroaimants individuels (142i1-142i8) qui peuvent avoir chacun une polarité nord ou sud.

4. Dispositif de commande de vitre selon l'une quelconque des revendications 1 à 3, dans lequel les première et seconde bandes d'aimant permanent (121, 122) sont disposées le long d'un bord d'extrémité de la vitre de fenêtre (12) qui est recouvert par le cadre de vitre (14).

5. Portière de véhicule (10) comprenant une vitre de fenêtre supérieure (12) et un dispositif de commande de vitre selon l'une quelconque des revendications 1 à 4 pour commander le déplacement vers le haut et vers le bas de ladite vitre de fenêtre supérieure (12).

6. Portière de véhicule (10) selon la revendication 5, comprenant en outre des joints d'étanchéité disposés entre la vitre de fenêtre supérieure (12) et le cadre de vitre (14), lesdits joints d'étanchéité étant adaptés pour empêcher l'entrée d'eau et les fuites d'air.

7. Portière de véhicule (10) selon la revendication 5 ou 6, comprenant en outre une vitre de fenêtre inférieure qui est reliée de manière fixe au cadre de vitre (14).
